# DEMANDE DE BREVET EUROPEEN

(11) **EP 1 564 861 A1**
(43) Date de publication de la demande: **17.08.2005**
(21) Numéro de dépôt: 05290237.6
(22) Date de dépôt: 03.02.2005
(51) Int. Cl.: H02G 3/38

(54) **Module de système constructif modulaire à cloisonnement transversal amovible**

(30) Priorité: 12.02.2004 FR 0401389
(71) Demandeur: Algeco, 71850 Charnay-Les-Maçon (FR)
(72) Inventeur: Boyard, Guy, 01270 Villemotier (FR); Convers, Paul, 39160 Saint-Amour (FR)
(74) Mandataire: Robert, Jean-Pierre

(57) **Abrégé**

Module de système constructif modulaire comportant un plancher, un plafond et des faces latérales, au moins le plafond étant recouvert d'un revêtement de plafond (17), le revêtement de plafond (17) étant pourvu d'au moins une rainure (18), destinée à accueillir le sommet d'une cloison (12) pourvue d'une ouverture de porte, au niveau de laquelle rainure est prévu un connecteur électrique comportant une partie fixe (19) et un premier élément amovible qui participe avec un câblage électrique (20) à la réalisation d'un circuit de commande en va et vient des moyens d'éclairage (7, 8, 9) du module, et un second élément, substituable au premier, qui participe avec ledit câblage électrique (20) à la réalisation d'un circuit de commande modifié desdits moyens d'éclairage (7, 8, 9) du module.

## Description

La présente invention concerne un module de système constructif modulaire destiné principalement à réaliser des bâtiments provisoires et dont un exemple de structure est décrit dans un brevet français du déposant déposé le même jour que le présent document et ayant pour titre "module de système constructif modulaire".

### ARRIERE PLAN DE L'INVENTION

Ce type de module comporte une armature ou une structure formée d'un plancher, d'un plafond et de poteaux de liaison du plancher au plafond. Les parois latérales sont habillées de panneaux formant pignons et longs pans du module tandis que le plancher et le plafond sont recouverts du côté du volume intérieur du module d'un revêtement qui, pour le plafond, est généralement suspendu à l'armature, et définit avec cette dernière un espace technique dans lequel peuvent courir notamment les fils électriques d'alimentation des points d'éclairage situés dans le revêtement de plafond.

Chaque module peut être adapté à sa fonction dans l'immeuble provisoire auquel il participe et il n'est pas rare de devoir le cloisonner par le travers pour définir deux volumes distincts, par exemple un volume de couloir et un volume de bureau, la cloison comportant une porte de communication entre ces deux volumes. L'installation d'éclairage par plafonnier doit être alors commandée différemment selon que le module est ou non cloisonné. En effet, chaque partition du volume doit pouvoir être éclairée indépendamment l'une de l'autre. Habituellement, le cloisonnement d'un module demande de modifier le circuit d'alimentation électrique des points lumineux. Pour ce faire, il faut donc accéder au compartiment technique situé au-dessus du revêtement de plafond dans l'armature du module, et donc avoir prévu ce revêtement démontable au moins partiellement pour pouvoir ménager un accès à ce compartiment technique.

Ce type de module pour construction provisoire est souvent mis sur le marché par le biais de la location. A la fin de chaque contrat, les modules sont rapatriés en usine pour réfection, entretien et réaménagement en fonction de la demande locative suivante. Il est donc utile que ce réaménagement puisse s'opérer le plus rapidement et le plus simplement possible en usine.

### BREVE DESCRIPTION DE L'INVENTION

Dans cette optique, le module de système constructif modulaire de l'invention qui comporte une armature formée d'un plancher et d'un plafond rectangulaires et de poteaux de liaison du plancher au plafond et qui comporte des panneaux de parement des faces latérales et un revêtement de plancher et un revêtement de plafond est tel que le revêtement de plafond est pourvu d'au moins une rainure sensiblement parallèle aux petits côtés des plancher et plafond, destinée à accueillir le sommet d'une cloison pourvue d'une ouverture de porte, au niveau de laquelle rainure est prévu un connecteur électrique comportant un premier élément amovible qui participe avec un câblage électrique à la réalisation d'un circuit de commande en va et vient des moyens d'éclairage du module, et un second élément substituable au premier qui participe avec ledit câblage électrique à la réalisation d'un circuit de commande modifié desdits moyens d'éclairage du module.

On comprend qu'avec ces moyens, cloisonner ou décloisonner un module devient une opération extrêmement simple : il suffit en effet de retirer un clip électrique situé au plafond du module pour découvrir des orifices ou broches d'accueil d'un second clip électrique, par exemple associé à une cloison afin de modifier le circuit d'éclairage pour par exemple introduire la commande d'un interrupteur porté par la cloison que l'on va mettre en place et à partir duquel on pourra commander l'éclairage d'une seule partie du volume du module. La mise en place de la cloison consiste à inserrer sa partie supérieure dans la rainure du plafond et à immobiliser son pied au plancher par tout moyen approprié.

Selon l'invention et pour obtenir ces résultats, les moyens d'éclairage comportent au moins un émetteur lumineux de chaque côté de la rainure du plafond. En outre, une partie du circuit de commande modifié des moyens d'éclairage est solidaire de la cloison susdite et comporte un interrupteur au voisinage de l'ouverture de porte.

Par ailleurs, le second élément du connecteur électrique participe à la réalisation d'un circuit de commande en va et vient d'un des émetteurs lumineux dans lequel est inséré l'interrupteur porté par la cloison et à la réalisation d'un circuit de commande simple de l'autre émetteur lumineux. Enfin, le second élément du connecteur sera de préférence physiquement relié à la partie supérieure de la cloison, c'est-à-dire soit disposé sur le chant supérieur de celle-ci alors que l'élément de connecteur solidaire du plafond est situé au fond de la rainure, soit solidaire de la cloison par une bande souple intégrant par exemple les fils électriques issus de l'interrupteur de manière à pouvoir être enfiché dans la partie de connecteur fixe située au fond de la rainure avant la mise en place de la cloison qui vient masquer la totalité de la connexion.

D'autres caractéristiques et avantages de l'invention ressortiront de la description d'un exemple de réalisation donné ci-après à titre indicatif.

### BREVE DESCRIPTION DES DESSINS

Il sera fait référence aux dessins annexés parmi lesquels :
- la figure 1 est un schéma illustrant un module de construction modulaire conforme à l'invention,
- la figure 2 est une vue de détail d'un élément de plafond de ce module,
- la figure 3 illustre le schéma électrique de base pour l'éclairage d'un module,
- la figure 4 est un schéma d'un premier élément de connecteur amovible tandis que,
- la figure 5 est un schéma d'un second élément de connecteur amovible associé à un interrupteur porté par la cloison.

### DESCRIPTION DETAILLEE DE L'INVENTION

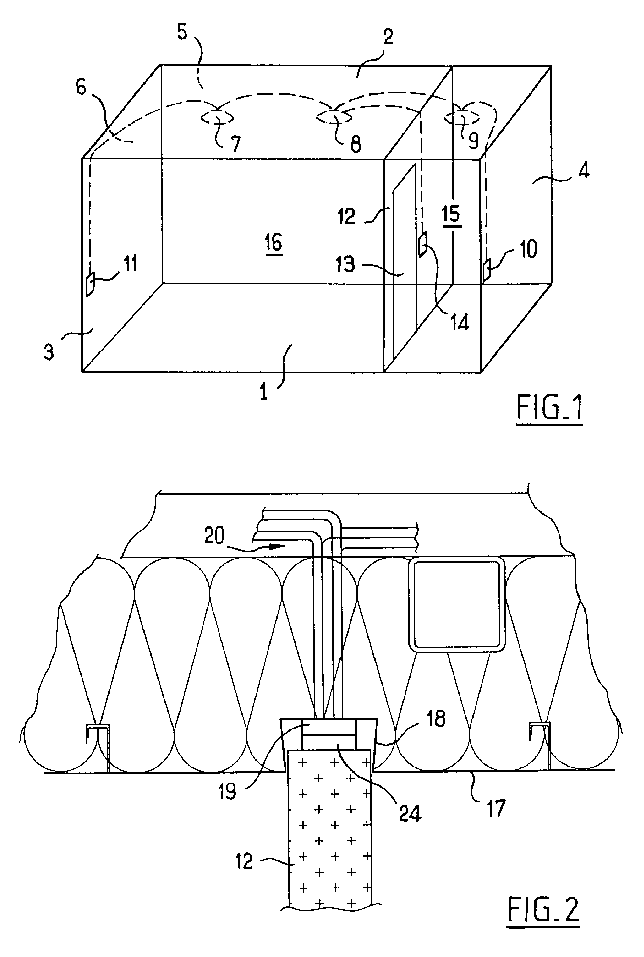

Le module schématiquement représenté à la figure 1 comporte un plancher 1, un plafond 2 et des parois latérales 3, 4, 5, 6. Le plafond 2 est équipé de trois points lumineux d'éclairage 7, 8, 9 commandés en va et vient par deux interrupteurs 10 et 11.

Il s'agit là d'une configuration de base pour la plupart des modules destinés à réaliser un bâtiment provisoire.

Ce type de module est utilisé soit tel quel, soit avec un aménagement intérieur. L'aménagement le plus courant de ce type de module est la mise en place d'une cloison 12 avec une ouverture de porte 13 et un interrupteur 14 au voisinage de cette ouverture de porte, pour séparer le volume intérieur du module en un volume de circulation de couloir 15 et un volume de bureau 16. Lorsque l'on met en place cette cloison 12, il convient de modifier la commande des points d'éclairage de manière que les points d'éclairage 7 et 8 destinés à la partie 16 du volume intérieur du module puissent être commandés en va et vient à partir des interrupteurs 11 et 14 alors que le point d'éclairage 9 du couloir 15 ne demande plus qu'une commande simple par l'interrupteur 10.

A la figure 2 on a représenté partiellement un revêtement de plafond 17 dans lequel une rainure 18 est ménagée pour recevoir le chant supérieur de la cloison 12. Au fond de cette rainure 18, le revêtement de plafond 17 comporte une partie fixe 19 d'un connecteur électrique auquel aboutissent et duquel sont issus des conducteurs électriques 20. Ces conducteurs constituent un circuit d'alimentation des points lumineux 7, 8 et 9 dans lequel sont intégrés les interrupteurs 10 et 11.

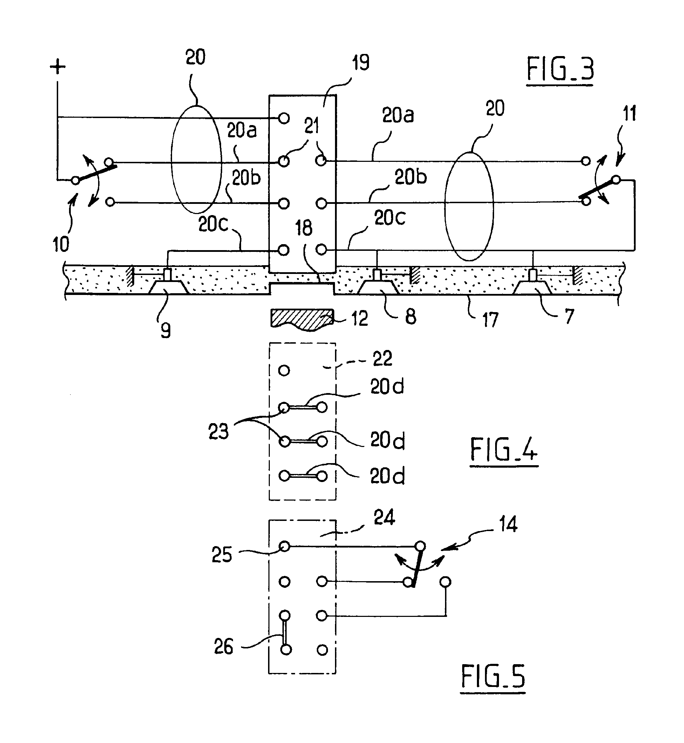

La figure 3 illustre par un schéma ce circuit électrique. On y reconnaît les points lumineux 7, 8 et 9, les interrupteurs 10 et 11 et la partie fixe 19 du connecteur électrique selon l'invention auquel aboutissent et duquel sont issus les fils électriques 20. Cette partie de connecteur 19 peut comporter par exemple des orifices conducteurs 21 auxquels aboutissent les fils 20.

A la figure 4 on a représenté schématiquement un premier élément amovible 22 du connecteur électrique qui est mis en place sur la partie fixe 19 du connecteur en l'absence de cloison 12. La fonction de cet élément 22 est d'assurer la continuité des trois conducteurs 20a, 20b et 20c du schéma électrique de la figure 3 afin que les interrupteurs 10 et 11 fonctionnent comme éléments de commande en va et vient de l'alimentation simultanée des trois points d'éclairage 7, 8 et 9. A cet effet, l'élément 22 de connexion comporte des broches 23 qui coopèrent avec les orifices manchonnés 21 et des conducteurs 20e qui assurent donc la continuité des fils 20a, 20b et 20c comme précédemment évoqué.

A la figure 5, on a représenté un second élément de connexion amovible 24 qui vient se substituer à l'élément 22 lorsque l'on met en place une cloison 12 dans le module. Cet élément 24, également pourvu de broches conductrices 25 a pour fonction de substituer à l'interrupteur 10 l'interrupteur 14 pour la commande en va et vient des points d'éclairage 7 et 8 et d'affecter l'interrupteur 10 à la commande simple du point lumineux 9. En superposant à la figure 3 le schéma de la figure 5, on comprend qu'effectivement le conducteur 26 de l'élément 24 relie l'interrupteur 10 au seul point d'éclairage lumineux 9 tandis que les autres broches 25 permettent de raccorder l'interrupteur 14 à l'alimentation et de l'insérer dans un circuit de va et vient avec l'interrupteur 11 pour la commande des points lumineux 8 et 9.

L'élément 24 peut être disposé au bout d'un conducteur plat qui serait issu du chant de la cloison et qui assurerait la liaison des broches 25 ou de certaines d'entre elles avec l'interrupteur 14. Ce conducteur plat serait suffisamment souple pour permettre avant la mise en place de la cloison 12 dans la rainure 18, l'enfichage de l'élément 24 dans la partie fixe de connecteur 19.

Dans un autre mode de réalisation, le connecteur 24 peut être fixé rigidement au sommet de la cloison 12 de sorte que la simple mise en place de cette cloison dans la rainure 18 provoque l'enfichage de l'élément 24 dans la partie fixe 19 du connecteur électrique.

## Revendications

1. Module de système constructif modulaire comportant un plancher (1), un plafond (2) et des faces latérales (3, 4, 5, 6), au moins le plafond (2) étant recouvert d'un revêtement de plafond (17), **caractérisé en ce que** le revêtement de plafond (17) est pourvu d'au moins une rainure (18), destinée à accueillir le sommet d'une cloison (12) pourvue d'une ouverture (13) de porte, au niveau de laquelle rainure est prévu un connecteur électrique comportant une partie fixe (19) et un premier élément amovible (22) qui participe avec un câblage électrique (20) à la réalisation d'un circuit de commande en va et vient des moyens d'éclairage (7, 8, 9) du module, et un second élément (24), substituable au premier, qui participe avec ledit câblage électrique (20) à la réalisation d'un circuit de commande modifié desdits moyens d'éclairage (7, 8, 9) du module.

2. Module selon la revendication 1, **caractérisé en ce que** les moyens d'éclairage (7, 8, 9) comportent au moins un émetteur lumineux (7, 8) de chaque côté de la rainure (18).

3. Module selon la revendication 2, **caractérisé en ce qu'**une partie du circuit de commande modifié des moyens d'éclairage est solidaire de la cloison (12) susdite et comporte un interrupteur (14) au voisinage de l'ouverture de porte.

4. Module selon la revendication 3, **caractérisé en ce que** le second élément (24) du connecteur électrique participe à la réalisation d'un circuit de commande en va et vient d'un des émetteurs lumineux (8, 9) dans lequel est inséré l'interrupteur (14) porté par la cloison (12) et à la réalisation d'un circuit de commande simple de l'autre émetteur lumineux (7).

5. Module selon la revendication 3, **caractérisé en ce que** le second élément (24) du connecteur est relié à la partie supérieure de la cloison (12).
